# EUROPÄISCHE PATENTSCHRIFT

(11) **EP 3 729 019 B1**
(45) Veröffentlichungstag und Bekanntmachung des Hinweises auf die Patenterteilung: **31.05.2023**
(21) Anmeldenummer: 18815221.9
(22) Anmeldetag: 14.12.2018
(51) Int. Cl.: G01G 7/02, G01G 21/07, G01G 21/24

(54) **MONOLITHISCHE WÄGEZELLE**
MONOLITHIC LOAD CELL
CELLULE DE PESAGE MONOLITHIQUE

(30) Priorität: 21.12.2017 EP 17209294
(43) Veröffentlichungstag der Anmeldung: 28.10.2020
(60) Teilanmeldung: 23167509.1
(73) Patentinhaber: Mettler-Toledo GmbH, 8606 Greifensee (CH)
(72) Erfinder: BURISCH, Arne, 8050 Zürich (CH); BURKHARD, Hans-Rudolf, 8492 Wila (CH); BALTISBERGER, Stephan, 8625 Gossau (CH); LOHER, Urs, 5512 Wohlenschwil (CH); METZGER, Andreas, 8708 Männedorf (CH)
(74) Vertreter: Mettler-Toledo
(86) Internationale Anmeldenummer: PCT/EP2018/084858
(87) Internationale Veröffentlichungsnummer: WO 2019/121350

(56) Entgegenhaltungen:
- EP-A1- 0 518 202
- EP-A1- 0 945 717

## Beschreibung

Die Erfindung betrifft eine zumindest teilweise monolithisch aufgebaute Kraftübertragungsvorrichtung mit einer Parallelführung und ein Verfahren zur Herstellung einer zumindest teilweise monolithisch aufgebauten Kraftübertragungsvorrichtung mit einer Parallelführung für eine Kraftmessvorrichtung, beispielsweise eine Waage.

Bekannte Vorrichtungen, zum Beispiel aus EP 0 518 202 A1, der eingangs genannten Art, die einstückig mit einer Parallelführung für ein der Krafteinleitung der zu messenden Kraft in die Koppel des Kraftübertragungshebels dienendes Krafteinleitungsteil ausgebildet sind, sind vor allem deswegen vorteilhaft, weil durch die einstückige Ausbildung alle Montagevorgänge für die gegenseitige Verbindung der einzelnen Teile untereinander mittels getrennt ausgebildeter Biegestellen entfallen. Ebenso entfallen dadurch auch das Vorspannungsaltern der Verschraubungen und die damit verbundenen Probleme. Ferner sind wegen der einstückigen Ausbildung die Materialeigenschaften an allen Stellen der Vorrichtung gleich, so dass durch unterschiedliche Materialeigenschaften hervorgerufene Fehler entfallen.

Das Material der einstückig (monolithisch) ausgebildeten Kraftübertragungsvorrichtung bestimmt mit Eigenschaften wie der Federsteifigkeit, der Zug- und Druckfestigkeit, dem Elastizitätsmodul, dem Temperaturkoeffizienten des Elastizitätsmoduls, der Anelastizität (auch als Kriechen bekannt) und der Linearität das Verhalten der Dünnstellenbiegelager - auch Biegelager oder Lagerstellen genannt - der Parallelführung, der Koppel und des Kraftübertragungshebels. Ebenso ist die Ausgestaltung der Lagerstellen in Dicke und Form (Querschnitt) und in der Breite (rechtwinklig zum Querschnitt) abhängig vom verwendeten Material der Kraftübertragungsvorrichtung. Demnach bestimmen die Lagerstellen wesentlich die Leistungskenndaten einer analytischen Waage.

Hochauflösende niederlastige Analysen- und Mikrowaagen benötigen Dünnstellenbiegelager mit einer möglichst geringen Federsteifigkeit, da das Übersetzungsverhältnis klein ist, und so die Rückstellkräfte der Dünnstellenbiegelager grösseren Einfluss auf die Kraftmessung haben. Anders gesagt führt eine geringere Federsteifigkeit der Dünnstellenbiegelager zu einer besseren Auflösung der Zelle. Die Federsteifigkeit eines Dünnstellenbiegelagers wird durch den Querschnitt und den Elastizitätsmodul des Materials bestimmt. Die Grenzen der prozesssicheren Serienproduktion von heutigen Dünnstellenbiegelager unter Verwendung einer speziellen Aluminiumlegierung liegen etwa bei 0.07 mm. In nachteiliger Weise erfordert dies bei der Handhabung bei Herstellung und Montage einen Schutz vor Beschädigung. Auch während dem Transport der fertigen Waage zum Kunden ist die Kraftübertragungsvorrichtung durch eine grosse Verpackung der Waage und eine Transportsicherung zu schützen.

EP 0 945 717 A1 liegt auf dem Gebiet des Einsatzes und der Behandlung legierten Stahls im Gerätebau und betrifft ein elastisch verformbares Bauteil für eine Messeinrichtung, insbesondere eine mehrstückige Kraftübertragungsvorrichtung. Das elastisch verformbare Bauteil der EP 0 945 717 A1 basiert auf einer Metallegierung, deren Gefüge im wesentlichen austenitisch ist. Bevorzugt wird legierter Stahl verwendet. Der Anteil an Ferrit und/oder Martensit ist auf unter zwei Prozent beschränkt, was gewährleistet, dass der Stahl nicht magnetisch ist. Ein Legierungsanteil Chrom von mehr als 11 Gewichtsprozenten sorgt für die notwendige Korrosionsbeständigkeit. Das Kristallgefüge weist eine Nanostruktur auf, welche die Versetzungen des Gefüges blockiert, was kleine Hysterese, Anelastizität und wenig Kriechen zur Folge hat. Weiter wird gelehrt, dass thermisches Aushärten sich insbesondere positiv auf die Elastizitätseigenschaften auswirkt, wenn es während mehr als fünf Stunden bei Temperaturen unter 480° C angewendet wird, ohne jedoch diesen Verfahrensschritt so lange auszudehnen, dass die Korrosionsfestigkeit sich in unzulässiger Weise verringert.

Anders als bei mehrstückigen Kraftübertragungsvorrichtungen kann das Material nicht optimal den Anforderungen an die funktionelle Aufgabe eines Bereichs der Kraftübertragungsvorrichtung angepasst werden. Es muss also immer ein Kompromiss gefunden werden zwischen dem optimalen Material für den eigentlichen Block, der die starren Teile bildet, und den Dünnstellen, die die jeweiligen Teile beweglich verbinden. Als ideales Material für den Block wird ein kostengünstiges Material angesehen, welches sich maschinell gut bearbeiten lässt und somit die Herstellung verkürzt und vereinfacht, und welches minimal korrosionsbeständig, das heisst kein hochwertig vergüteter Werkstoff ist. Für Dünnstellen sind wiederum andere Eigenschaften notwendig, die ein ideales Material in sich vereinen muss. Zum einen soll ein tiefer Elastizitätsmodul dafür sorgen, dass bei gleicher Beanspruchungsobergrenze der Querschnitt eines Dünnstellenbiegelagers möglichst klein gehalten werden kann (hohe Zugfestigkeit). Ebenso wichtig ist, dass der Temperaturkoeffizient des Elastizitätsmoduls gleich null oder beinahe null ist, was bedeutet, dass der Elastizitätsmodul sich durch eine Temperaturunabhängigkeit kennzeichnet. Gängige Materialien für die Lagerstellen bei mehrstückigen Kraftübertragungsvorrichtungen sind Kupfer-Beryllium-Legierungen oder das unter dem Handelsnamen bekannte Thermelast 4002 der Vacuumschmelze GmbH & Co. KG.

Ein interessantes Material für die Dünnstellenbiegelager sind Bulk Metallic Glasses
- kurz BMGs - oder auch amorphe Metalle genannt, eine Klasse von Metalllegierungen deren Mikrostruktur amorph und nicht kristallin ist. Durch schnelles Abkühlen der Legierungsschmelzen, wird die kristalline Keimbildung und das Keimwachstum unterbunden und somit die amorphe Mikrostruktur im festen Zustand quasi eingefroren. BMGs weisen typischerweise eine höhere Härte, Festigkeit und Korrosionsbeständigkeit auf als gewöhnliche Metalle, bei zugleich relativ tiefem Elastizitätsmodul.

Pioniere für die kommerzielle Nutzung von amorphen Metallen ist die Firma Liquidmetal Technologies, die hauptsächlich Zirkonium-basierte Gläser anbietet. Weitere kommerzielle Anbieter sind YKK und Advanced Metal Technology. Aktuell werden amorphe Metalle nur in einigen wenigen Nischen angewendet, in denen hohe (Verschleiss-)Festigkeit und gute Korrosionseigenschaften gefordert sind. Beispiele von aktuellen Anwendungen sind: Gehäuseteile für Mobiltelefone, Skalpelle, Sportgeräte wie Golfschläger und Tennisrackets, Schmuckgegenstände und Uhrengehäuse.

Die jüngsten Entwicklungen im Bereich der Verarbeitungstechnologien für amorphe Metalle, insbesondere bei den Verfahren zur thermoplastischen Formgebung von amorphen Metallen, lassen es als realistisch erscheinen, dass diese Materialien vorteilhalft für die Verwendung als elastisches Lager für mehrteilige Lastzellen in Analyse- und Mikrowaagen eingesetzt werden können. Durch den Einsatz dieser Materialien bei Wägezellen ist eine verbesserte Schlag- und Überlast-Unempfindlichkeit, sowie verbesserte Linearität und geringeres Lastdriftverhalten zu erwarten. Diese Lager können die bisher verwendeten Biegelagerelemente an mehrteilig zusammengebauten Kraftübertragungsvorrichtungen ersetzen, wie sie zum Beispiel in DE 198 45 023 A1 gezeigt ist. Eine mehrteilige Lastzelle mit elastischen Lagern aus amorphem Metall wurde bisher noch nicht auf den Markt gebracht.

Als ein Ziel dieser Erfindung ist es die Materialeigenschaften der amorphen Metalle auch für monolithische Kraftübertragungsvorrichtungen nutzbar zu machen. Generell ist es das Ziel dieser Erfindung das Material an den Lagerstellen sowie am "Block" gezielt unabhängig voneinander anzupassen und dabei die monolithische Bauart beizubehalten, sei es indem die ganze Kraftübertragungsvorrichtung oder zumindest Funktionsbereiche der Kraftübertragungsvorrichtung monolithisch ausgestaltet sind.

Gelöst wird das Problem mittels einer Kraftübertragungsvorrichtung mit einer Parallelführung aufweisend einen beweglichen Parallelschenkel, einen feststehenden Parallelschenkel, einen ersten Parallellenker und einen zweiten Parallellenker, wobei die Parallelschenkel und die Parallellenker durch Dünnstellenbiegelager miteinander verbunden sind, wobei der bewegliche Parallelschenkel durch die Parallellenker am feststehenden Parallelschenkel geführt ist, weiter mit einem am feststehenden Parallelschenkel angeordneten Kraftübertragungshebel aufweisend ein Hebellager, und einem ersten Hebelarm, wobei der Kraftübertragungshebel am Hebellager schwenkbar gelagert ist und dessen erster Hebelarm mit dem beweglichen Parallelschenkel in kraftübertragender Weise mit verbunden ist, wobei die kraftübertragende Verbindung mittels eines Koppelelements mit weiteren Dünnstellenbiegelager erfolgt, wobei die Kraftübertragungsvorrichtung oder zumindest ein Funktionsbereich der Kraftübertragungsvorrichtung monolithisch ausgebildet ist, und wobei ein Funktionsbereich der Kraftübertragungsvorrichtung jeweils aus dem ersten Parallellenker, und/oder dem zweiten Parallellenker, und/oder dem Kraftübertragungshebel und/oder dem Koppelelement, und aus den jeweils angrenzenden Lagerstellen besteht.

Die Erfindung nach Anspruch 1 zeichnet sich dadurch aus, dass die Kraftübertragungsvorrichtung oder zumindest einer der Funktionsbereiche aus mindestens einem ersten Werkstoff besteht, und dass mindestens eine der Lagerstellen der Kraftübertragungsvorrichtung oder des zumindest einen Funktionsbereichs aus einem zweiten Werkstoff besteht, wobei der zweite Werkstoff ein amorphes Metall ist.

Gemäss der Erfindung ist der zweite Werkstoff in der aus dem ersten Werkstoff ausgebildeten Kraftübertragungsvorrichtung oder dem Funktionsbereich zumindest teilweise eingebettet. In diesem Sinne soll " teilweise eingebettet" verstanden sein als dass der zweite Werkstoff in dem ersten Werkstoff schützend oder passend teilweise umschlossen ist, d.h. der zweite Werkstoff in Umgebendes legen bzw. einfügen oder in ein grösseres Ganzes einbinden bzw. integrieren.

Wie oben schon beschrieben besteht ein Funktionsbereich aus einem Funktionselement der Kraftübertragungsvorrichtung, welches eine bestimmte Funktion hat, wie zum Beispiel der obere Parallellenker, der den beweglichen Parallelschenkel in einer bestimmten Distanz vom feststehenden Parallelschenkel beweglich führt. Zusammen mit dem unteren Parallellenker bilden diese vier Elemente das Parallelogramm der Kraftübertragungsvorrichtung. Jeder Funktionsbereich besteht weiter aus den an das Funktionselement angrenzenden Lagerstellen, welche die Verbindung zu einem nächsten Funktionselement herstellen.

Unter Lagerstellen sind die verschiedenen treffender bezeichneten Drehpunkte zu verstehen, welche an einer Kraftübertragungsvorrichtung vorhanden sind. Als Dünnstellenbiegelager werden häufig die Drehpunkte bezeichnet, die das Parallelogramm definieren, und als Hebellager jener Drehpunkt an welchem der Kraftübertragungshebel das Übersetzungsverhältnis bestimmt. Weitere Biegelager sind jene Dünnstellen bei der Kraftübertragung zwischen dem beweglichen Parallelschenkel und dem ersten Hebelarm des Kraftübertragungshebels. In einer Variante ist das hier dazwischenliegende Element - auch Koppel genannt - über zwei der besagten Biegelager mit dem beweglichen Parallelschenkel einerseits und dem ersten Hebelarm des Kraftübertragungshebels andererseits verbunden. In einer anderen Variante ist der bewegliche Parallelschenkel direkt über ein solches Biegelager mit dem ersten Hebelarm des Kraftübertragungshebels verbunden.

Eine Kraftübertragungsvorrichtung kann gänzlich monolithisch oder zumindest teilweise an ihren Funktionsbereichen monolithisch ausgebildet sein. Es entstehen dabei verschiedenste Kombinationsmöglichkeiten unter den Funktionsbereichen, so dass zum Beispiel ein Parallellenker zusammen mit den Lagerstellen monolithisch ausgebildet sein kann, welcher dann jeweils durch z.B. Schraubverbindungen an den Parallelschenkeln angebracht wird. Eine andere Kombination bestünde darin das ganze Parallelogramm inklusive den Dünnstellenbiegelagern monolithisch auszubilden und, den Funktionsbereich des Kraftübertragungshebels wie in einer mehrstückigen Kraftübertragungsvorrichtung einzubauen. Umgekehrt liesse sich auch der Funktionsbereich des Kraftübertragungshebels monolithisch aufbauen, um dann in einem Parallelogramm einer mehrstückigen Kraftübertragungsvorrichtung eingebaut zu werden.

Die Erfindung führt zu einer Reihe von Vorteilen. Zu einen kann, um die gleichen Anforderungen zu erfüllen, der Querschnitt der Lagerstelle angepasst bzw. verringert werden, was zu einer Verringerung der Federsteifigkeit führt. Eine geringere Federsteifigkeit der Lager führt zu besserer Auflösung der Zelle.

Im Gegenzug würde aber ein gleichbleibender Querschnitt die Robustheit erhöhen. Eine verbesserte Robustheit oder Schlagempfindlichkeit der Zelle durch stabilere Gelenkstellen, bei gleichem Querschnitt bietet mehr Sicherheit beim Transport und vermindert den dazu erforderlichen Verpackungsaufwand. Einfacher gesagt verbreitert sich das Auslegungsspektrum für die Entwicklung neuer Wägezellentypen.

In einer weiteren Weiterbildung besteht zumindest eine weitere Lagerstelle aus einem weiteren Werkstoff. Wie oben schon erwähnt, ist es das Ziel der Erfindung die Materialien an den Lagerstellen sowie am Grossteil der Kraftübertragungsvorrichtung gezielt an die Anforderungen anzupassen. An jeder Lagerstelle kann somit das bestgeeignetste Material verwendet werden.

Eine Ausgestaltung ist dadurch gekennzeichnet, dass der erste Parallellenker und/oder der zweite Parallellenker aus dem ersten Werkstoff bestehen, und dass die Dünnstellenbiegelager aus dem zweiten oder dem weiteren Werkstoff bestehen.

Eine weitere Ausgestaltung ist dadurch gekennzeichnet, dass der Kraftübertragungshebel und/oder das Koppelelement aus dem ersten Werkstoff bestehen, und dass das Hebellager und/oder die weiteren Dünnstellenbiegelager des Koppelelements aus dem zweiten oder dem weiteren Werkstoff bestehen.

Erfindungsgemäß ist der zweite Werkstoff und der weitere Werkstoff ein amorphes Metall. Vorteilhafterweise ist das amorphe Metall eine Verbindung auf Zirkonium-Titan Basis. Eine Verbindung auf Zirkonium-Titan Basis ist z.B. Zr-Ti-Cu-Ni-Be, Zr-Ti-Cu-Ni-Al, oder Zr-Cu-Ni-Al-Nb. Auch gibt es amorphe Metalle auf Basis von Mangan, von Kupfer (Cu-Ni-Co), auf Basis von Eisen (Fe-Co-Zr-Nb-B) oder Edelmetallen wie Platin (Pt-Cu-Ni-P). Weiter gibt es geeignete Verbindungen aus Titan und Schwefel (Ti-S) und damit aus Elementen, die sehr häufig auf der Erde vorkommen und industriell gut nutzbar sind, da die sehr leichten Legierungen aus Titan und Schwefel fast doppelt so fest wie gängige Metalle auf Titanbasis sind. Anders als amorphe Metalle auf Basis von Zirkonium, Palladium oder Platin ist Titan verhältnismässig günstig, ebenso wie der Schwefel, der darüber hinaus keine hochgiftige Wirkung hat wie die in solchen Legierungen bisher häufig verwendeten Elemente Beryllium oder Phosphor. Es gibt also sehr viele spezielle Legierungen mit jeweils unterschiedlichen Eigenschaften. Ebenso kann man davon ausgehen, dass mit der Zeit weitere Legierungen entwickelt werden, die sich aufgrund ihrer Eigenschaften als zweiten oder weiteren Werkstoff eignen würden. Generell eignen sich amorphe Metalle besonders gut wegen ihrem grossen Linearitätsbereich, ihrer hohen Anelastizität und ihrer geringen Hysterese.

In einer Weiterbildung ist die Kontur der Ausnehmung derart gestaltet, dass die Lagerstelle aus dem zweiten oder dem weiteren Material durch Formschluss in dem das zweite oder das weitere Material umgebenden ersten Material befestigt angeordnet ist. Ein solcher Formschluss kann durch die Gestaltung der Ausnehmung erreicht werden, indem zum Beispiel speziell ausgebildete Taschen in das erste Material eingelassen werden, sei es durch z.B. Fräsen, Giessen oder Senkerodieren.

In einer weiteren Weiterbildung entspricht die Form mindestens einer Ausnehmung mindestens drei parallel verlaufenden, sich überschneidenden Bohrungen.

In einer weiteren vorteilhaften Weiterbildung verläuft die Flucht der Bohrungen parallel oder rechtwinklig zu dem entsprechend auszubildenden Dünnstellenbiegelager der Parallelführung; dem Hebellager des Kraftübertragungshebels; und/oder dem Koppelelement; und/oder dem Dünnstellenbiegelager des Koppelelements. Weiter sind auch Bohrungen möglich, deren Flucht in einem Winkel abweichend zur Ausrichtung oder rechtwinklig zur Ausrichtung des auszubildenden Dünnstellenbiegelagers verläuft, also schräg ist.

Hergestellt wird die Kraftübertragungsvorrichtung mittels des erfinderischen Verfahren zur Herstellung einer monolithisch ausgebildeten Kraftübertragungsvorrichtung oder zumindest eines monolithisch ausgebildeten Funktionsbereichs einer Kraftübertragungsvorrichtung nach Anspruch 9, wobei die Kraftübertragungsvorrichtung eine Parallelführung mit einem beweglichen Parallelschenkel, einem feststehenden Parallelschenkel, einem ersten Parallellenker und einem zweiten Parallellenker aufweist, wobei die Parallelschenkel und die Parallellenker durch Dünnstellenbiegelager miteinander verbunden sind, wobei der bewegliche Parallelschenkel durch die Parallellenker am feststehenden Parallelschenkel geführt ist, weiter aufweisend einen am feststehenden Parallelschenkel angeordneten Kraftübertragungshebel mit einem Hebellager, und einem ersten Hebelarm, wobei der Kraftübertragungshebel am Hebellager schwenkbar gelagert ist und dessen erster Hebelarm mit dem beweglichen Parallelschenkel in kraftübertragender Weise mit verbunden ist, wobei die kraftübertragende Verbindung mittels eines Koppelelements mit mindestens einem weiteren Dünnstellenbiegelager erfolgt, und wobei ein Funktionsbereich der Kraftübertragungsvorrichtung jeweils aus dem ersten Parallellenker, oder dem zweiten Parallellenker, oder dem Kraftübertragungshebel und/oder dem Koppelelement, und aus den jeweils angrenzenden Lagerstellen besteht, aufweisend die folgenden Schritte: A) Bereitstellen eines Rohlings aus einem ersten Werkstoff; B) Erstellen von Ausnehmungen am bereitgestellten Rohling zumindest an den Stellen an denen eine Lagerstelle zu liegen kommt; C) Ausfüllen der erstellten Ausnehmungen aus Schritt B mit einem zweiten Werkstoff, wobei der zweite Werkstoff ein amorphes Metall ist; D) Nachbearbeitung des mit ausgefüllten Ausnehmungen versehenen Rohlings aus Schritt C durch maschinelles Abtragen des ersten und/oder zweiten Werkstoffs; und E) Freilegen der mindestens einen Lagerstelle an den Stellen der ausgefüllten Ausnehmungen so, dass die Kraftübertragungsvorrichtung oder zumindest der mindestens eine Funktionsbereich aus dem ersten Werkstoff gebildet wird und so, dass die mindestens eine Lagerstelle der Kraftübertragungsvorrichtung oder des zumindest einen Funktionsbereichs aus dem zweiten Werkstoff ausgebildet wird.

Das erfinderische Verfahren begünstigt den Produktionsprozess für eine Kraftmessvorrichtung dahingehend, dass durch die Wahl des idealen Materials für den "Block" dieser schneller bearbeitbar ist. Ebenso kann beim Handling in der Montage dank den robusteren Lagerstellen weniger kaputtgehen, was die Anzahl an Ausschusswaren verringert.

Das Bereitstellen des Rohlings kann auch durch Giessen oder Strangpressen erfolgen. Die Schritte A und B und/oder C können auch kombiniert erfolgen, wie zum Beispiel beim Giessen die Ausnehmungen bereits erstellt werden oder beim Strangpressen das zweite Material gleichzeitig eingebracht wird (Zweikomponenten-Strangpressen).

Eine Weiterbildung des Verfahrens gekennzeichnet sich dadurch, dass zwischen Schritt B und C zusätzlich eine Oberflächenbehandlung im Bereich der Ausnehmungen erfolgt. Zum Beispiel können dies eine Nachbearbeitung des Giessrohlings, und/oder eine An- Abätzung (Beizen) oder Beschichten der Oberfläche, und/oder eine Aufbringung einer Mikrostruktur sein. Generell wird hierdurch die mechanische Verbundenheit des ersten Werkstoffes mit dem zweiten und/oder weiteren Werkstoff verbessert.

Eine andere Weiterbildung des Verfahrens kennzeichnet sich dadurch, dass in Schritt C die Ausnehmungen am bereitgestellten Rohling mit einem vorgefertigten Bauteil ausgefüllt werden, wobei das ausfüllende Bauteil additiv gefertigt ist, insbesondere mittels Laserstrahlschmelzens im Pulverbettverfahren gefertigt ist

Eine weitere Weiterbildung des Verfahrens gekennzeichnet sich dadurch, dass zwischen Schritt C und D zusätzlich eine Nachbehandlung der Übergangszone zwischen zweien der mindestens zwei Werkstoffen erfolgt. Diese kann beispielsweise durch lokalen Wärmeeintrag (bspw. mittels eines Lasers) erfolgen, der dafür sorgt, dass sich eine stoffschlüssige Materialverbindung in der Überganszone einstellt, oder mittels eines niedrigviskosen Klebstoffes (z.B. auf Zyanid-Basis, oder unter UV-Licht aushärtend), der in mögliche Zwischenräume zwischen dem ersten Material und dem zweiten oder weiteren Material kriecht. Die Vorteile ergeben sich aus einer stabilen Verbindung bei gleichzeitiger Beibehaltung der speziellen Eigenschaften der Werkstoffe ausserhalb der Übergangszone, d.h. die Glastemperatur vom BMG wird im Material nicht überschritten und Eigenschaften erhalten bleiben.

In einer weiteren Weiterbildung des Verfahrens erfolgt das Ausfüllen der Ausnehmungen (210, 310, 410) durch Giessen, Umformen, oder Einkneten.

Die erfinderische Kraftübertragungsvorrichtung wird anhand der folgenden Figuren näher beschrieben, wobei gleiche Elemente mit denselben Bezugszeichen versehen sind. Es zeigen:
- Fig. 1a: eine monolithische Kraftübertragungsvorrichtung in der Seitenansicht;
- Fig. 1b: ein monolithischen ausgebildeter Parallellenker in einer räumlichen Darstellung;
- Fig. 1c: ein monolithisch ausgebildetes Parallelogramm in der Aufsicht;
- Fig. 2a - 2c: Ausschnitte im Bereich eines Parallelogramm-Dünnstellenbiegelagers der Kraftübertragungsvorrichtung aus Fig.1, mit parallel zum Dünnstellenbiegelager verlaufender Flucht der Bohrungen;
- Fig. 2d - 2f: Ausschnitte im Bereich eines Parallelogramm-Dünnstellenbiegelager der Kraftübertragungsvorrichtung aus Fig.1, mit rechtwinklig zum Dünnstellenbiegelager verlaufender Flucht der Bohrungen;
- Fig. 2g: den monolithisch ausgebildeten Parallellenker auf Fig. 1b, mit an den Lagerstellen ersetztem Material;
- Fig. 3a - 3f: Ausschnitte im Bereich des Koppelelementes der Kraftübertragungs-vorrichtung aus Fig.1;
- Fig. 4a - 4i: Ausschnitte im Bereich des Hebellagers der Kraftübertragungsvorrichtung aus Fig.1;
- Fig. 5a - 5b: Ausschnitte im Bereich Hebellager/Koppelelement/Dünnstellenbiege-lager der Kraftübertragungsvorrichtung aus Fig.1;
- Fig. 6a - 6b: eine Einspritzvorrichtung zum Ausfüllen von Ausnehmungen;
- Fig. 7a - 7b: einen Querschnitt durch eine ausgefüllte Ausnehmung.

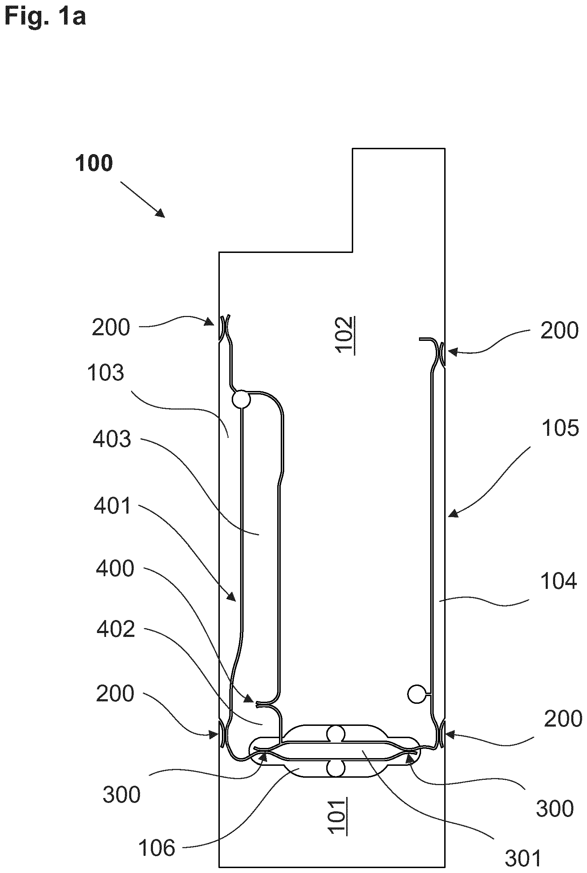

Figur 1a zeigt eine bekannte Kraftübertragungsvorrichtung 100 mit einem beweglichen Parallelschenkel 101 und einem feststehenden Parallelschenkel 102. Die beiden Parallelschenkel 101, 102 sind durch einen ersten Parallellenker 103 und einen zweiten Parallellenker 104 miteinander verbunden und durch Dünnstellenbiegelager 200 beweglich geführt. Die so ausgebildete Parallelführung 105 (oder auch Parallelogramm genannt) der Kraftübertragungsvorrichtung 100 aus einem Stück gleichen Materials ist auch bekannt als monolithische Bauart.

Weitere Elemente der Kraftübertragungsvorrichtung 100 sind ebenso monolithisch in demselben Materialblock ausgebildet, wie z.B. das Koppelelement 301 und dessen Dünnstellenbiegelager 300 sowie das Hebellager 400 und der Kraftübertragungshebel 401. Alle diese Elemente sind hier in der Figur 1a durch ein Drahterodierverfahren gebildet worden indem die Drahtführung entsprechend gewählt wird. Die Ausbildung dieser Elemente kann auch durch Fräsen oder Senkerodieren erfolgen. Zusätzliche Formgebungen 106 bewirken, wie hier im Bereich des Koppelelements 300, eine Verschmälerung in der Breite der Kraftübertragungsvorrichtung 100. Solche Formgebungen sind auch im Bereich des Hebellagers 400 und der Dünnstellenbiegelager 200 der Parallelführung 105 bekannt um gewisse mechanische Vorteile zu erzielen, welche vorgegebener Massen allein durch die Dimensionierung der Formgebung selbst abhängig sind.

Um auch im Hinblick auf das Material mechanische Vorteile zu erzielen wird vorgeschlagen, dass das Material an diesen Stellen aus einem zweiten Werkstoff, welcher dem ersten Werkstoff der Kraftübertragungsvorrichtung 100 verschieden ist, besteht.

Wie einleitend beschrieben, eignen sich amorphe Metalle aufgrund ihrer Materialeigenschaften sehr gut für diesen Zweck. Bei mehrstückigen Kraftübertragungsvorrichtungen ist es relativ einfach das bis anhin verwendete Material der Dünnstellenbiegelager durch ein amorphes Metall zu ersetzen, da es sich um ein separates Bauteil handelt. Die einstückige Bauart - oder eben monolithische Bauart- ist in dieser Hinsicht um Grössenordnungen komplexer und umso aufwändiger ist die Realisierung einer erfinderischen Kraftübertragungsvorrichtung 100 aus mindestens zwei verschiedenen Werkstoffen in der Herstellung.

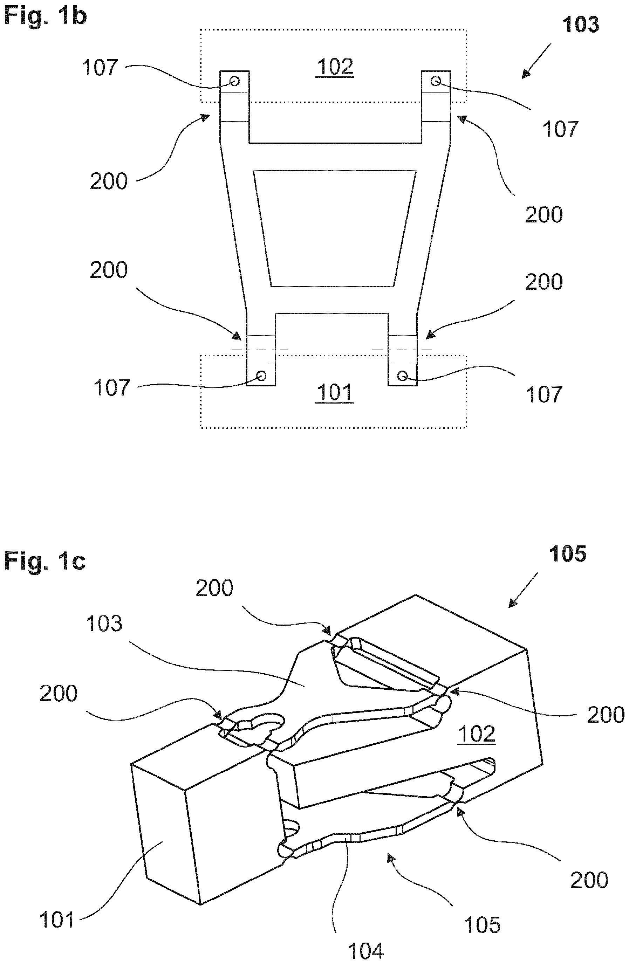

Figur 1b zeigt einen Parallellenker 103 (könnte auch der Parallellenker 104 sein) als monolithisch ausgestalteter Funktionsbereich. An den oberen und unteren Enden ist am Parallellenker 103 jeweils ein Dünnstellenbiegelager 200 angeordnet. Mittels der Befestigungslöcher 107 wird der Funktionsbereich an jeweils einer Seite mit dem beweglichen Parallelschenkel 101 und dem feststehenden Parallelschenkel 102 verbunden (Umrisse gestrichelt dargestellt).

In Figur 1c ist eine monolithisch ausgestaltete Parallelführung 105 als Funktionsbereich gezeigt, gebildet durch die Parallelschenkel 101 und 102, die Parallellenker 103 und 104, und durch die Dünnstellenbiegelager 200.

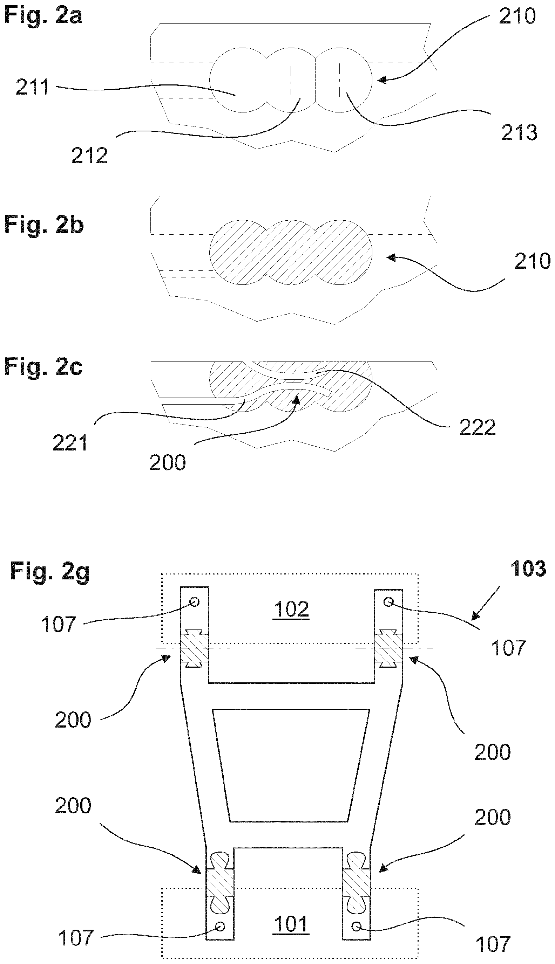

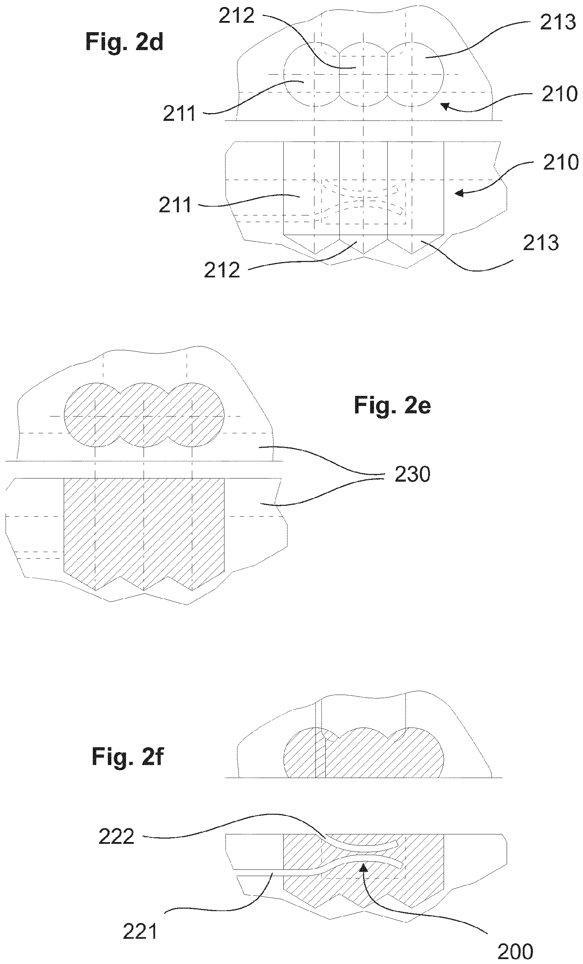

Ein Verfahren zur Herstellung einer monolithischen Kraftübertragungsvorrichtung 100 soll anhand der Figuren 2a bis 2c aufgezeigt werden. Ein Rohling, aus welchem zu allerletzt die fertige Kraftübertragungsvorrichtung 100 hervorgehen wird, wird bereitgestellt, das heisst auf seine Aussenmasse mit allenfalls erforderlichem Aufmass zugeschnitten, gefräst oder gegossen. Die oben erwähnten Formgebungen 106 können auch bereits in diesem Schritt schon fertig oder mit Aufmass erstellt werden, wie z.B. bei einem Rohling hergestellt mittels Druckgussverfahren.

Wie in Figur 2a dargestellt wird zunächst eine Ausnehmungen 210 erstellt und zwar hier zumindest an den Stellen an denen ein Dünnstellenbiegelager 200 der Parallelführung 105 zu liegen kommt. In Figur 2a ist diese Ausnehmung 210 durch drei sich in gleicher Flucht befindlichen und sich überschneidenden Bohrungen 211, 212, 213 ausgebildet.

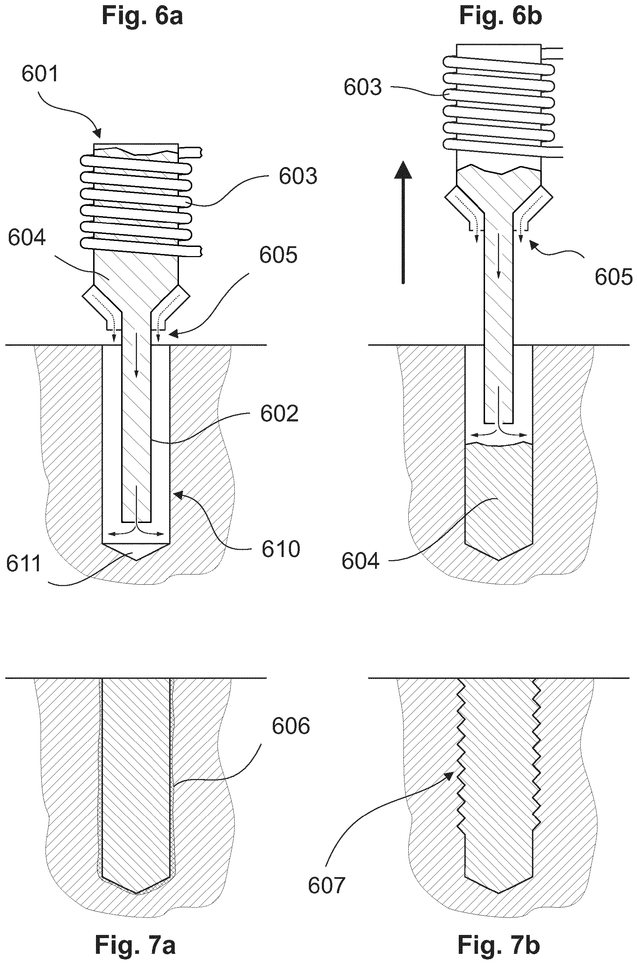

Die zuvor erstellte Ausnehmung 210 wird daraufhin mit dem zweiten Werkstoff ausgefüllt. Ein mögliches Verfahren zum Ausfüllen der Ausnehmung 210 wird weiter unten zu den Figuren 6a und 6b beschrieben. Der fertig eingebrachte zweite Werkstoff in der Ausnehmung 210 ist in Figur 2b durch die Schraffierung hervorgehoben dargestellt.

Die für die einstückige Bauart charakteristische Verbindungsstellen, oder auch Materialbrücken - hier im Bereich der Dünnstellenbiegelager 200 der Parallelführung 105 - werden nach erfolgtem Ausfüllen bearbeitet. Die Ausbildung der Gelenkstelle des Dünnstellenbiegelager 200, oder auch Freilegen genannt, kann durch Drahterodieren, Senkerodieren, ECM (Electro Chemical Machining) oder Fräsen beziehungsweise Hochgeschwindigkeitsfräsen geschehen. In Figur 2c ist das Dünnstellenbiegelager 200 durch Drahterodieren ausgebildet worden, erkennbar an den Trennschnitten 221, 222. In den Figuren 2a und 2b sind diese Trennschnitte als gestrichelte Linien gezeigt. Das für Erstellung einer Ausnehmung 210 nötige Material um die Ausnehmung 210 selbst herum kann ebenfalls entfernt werden

Die Ausnehmung 210 kann in unterschiedlichen Formen ausgebildet sein, solange diese geeignet ist den während der Verwendung der Kraftübertragungsvorrichtung auftretenden Einwirkungen standzuhalten, das heisst dass der zweite Werkstoff mit ausreichender Festigkeit an Ort gehalten wird.

Eine andere Möglichkeit bzw. Positionierung einer Ausnehmung für die Dünnstellenbiegelager 200 zu erstellen ist in den Figuren 2d bis 2f gezeigt. Während in den Figuren 2a bis 2c die drei Bohrungen 211, 212, 213 parallel zu den Trennschnitten 221 und 222 verlaufen, verlaufen die Bohrungen 211`, 212`, 213` in den Figuren 2c bis 2f senkrecht zu den Trennschnitten 221, 222. Jede der drei Figuren 2d bis 2f ist bestehend aus je zwei Teilfiguren - einer Auf- und einer Seitenansicht. Gut zu sehen ist bei dieser Möglichkeit, dass die Stelle des Dünnstellenbiegelagers 200 ein Aufmass 230 benötigt, damit die Ausnehmung 210' rundum vom ersten Werkstoff der Kraftübertragungsvorrichtung 100 umgeben ist. Nach dem Ausfüllen wird dieses Aufmass 230 beim Freilegen entfernt und das Dünnstellenbiegelager 200 erhält seine finale Form.

Bei Materialpaarungen zwischen den Werkstoffen besteht die Möglichkeit, dass an den Werkstoffgrenzen keine Verschmelzung, Durchmischung oder Verbindung, das heisst kein Materialschluss (Stoffschluss) entsteht, so dass es sehr schnell zur Ablösung des einen ausfüllenden Werkstoffes kommen kann. In diesem Fall ist die Form der Ausnehmung 210, 210' entscheidend, damit ein Formschluss entsteht. Je nach Wirkungsrichtung der auftretenden Kräfte in dem Bereich, welcher durch den zweiten oder den weiteren Werkstoff ersetzt wurde, ist die Ausrichtung der Ausnehmung entscheidend. Nicht nur die Richtung der Bohrungen 211, 212, 213, 211`, 212`, 213` haben Einfluss auf die Eignung, sondern auch weitere Ausführungen mit Gewindebohrungen sind teils vorteilhaft, da diese eine vergrösserte Kontaktfläche schaffen. Hier ist noch anzumerken, dass auch Mikrostrukturen auf der Oberfläche selbst geeignet sind um die Kontaktfläche zu vergrössern.

In der Figur 2g ist der monolithisch ausgebildete Parallellenker 103 aus Fig. 1b, mit an den Lagerstellen 200 ersetztem Material (schraffiert) gezeigt. Durch spezielle Kontur an den Materialgrenzen zwischen dem ersten Material des Parallellenkers 103 und dem zweiten oder weiteren Material der Lagerstellen 200 entsteht ein Formschluss. Dieser Funktionsbereich kann zum Beispiel so hergestellt werden, indem in einem ersten Schritt eine der Dicke des Parallellenkers 103 entsprechende Platte als Rohling zur Verfügung gestellt wird. Als nächstes werden Ausnehmungen in der Platte erstellt, welche, nach etwaigen Vorbehandlungen, mit dem zweiten oder dem weiteren Material ausgefüllt werden. Schlussendlich kann dann die endgültige Form des Parallellenkers 103 ausgeschnitten, gestanzt oder gefräst werden.

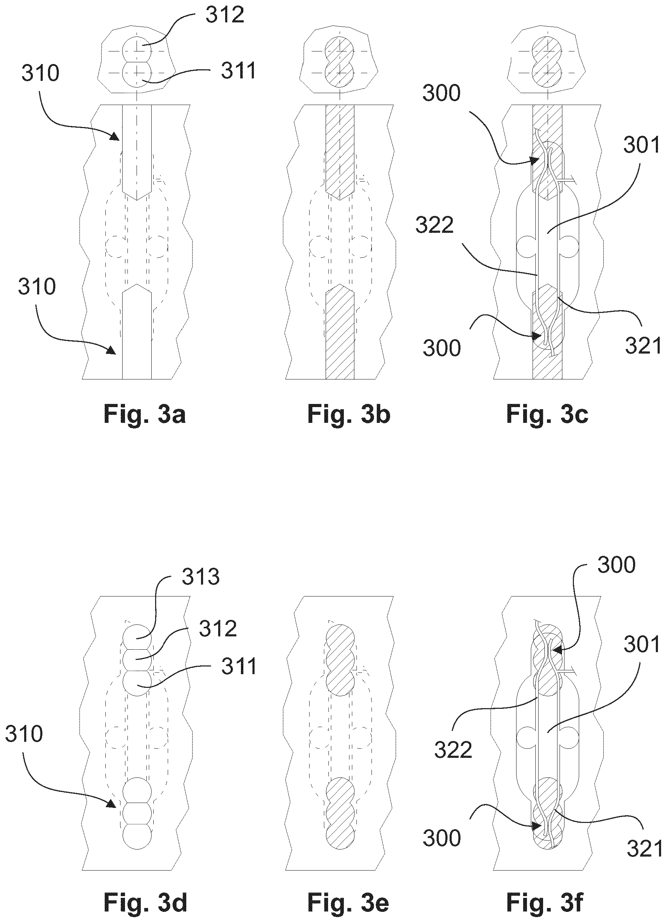

In den Figuren 3a bis 3c und 3d bis 3f sind die oben beschriebenen Schritte zur Herstellung einer monolithischen Kraftübertragungsvorrichtung 100 an der Stelle des Koppelelements 301 und den weiteren Dünnstellenbiegelager 300 des Koppelelements 301 dargestellt. Wiederum ist die Positionierung einer Ausnehmung 310 in zwei Möglichkeiten gezeigt; einmal indem die Flucht der Bohrungen 311, 312, 313 senkrecht zu den Trennschnitten 321 und 322 in den Figuren 3a bis 3c verläuft, und einmal indem die Flucht der Bohrungen 311, 312, 313 parallel zu den Trennschnitten 321, 322 in den Figuren 3d bis 3f verläuft.

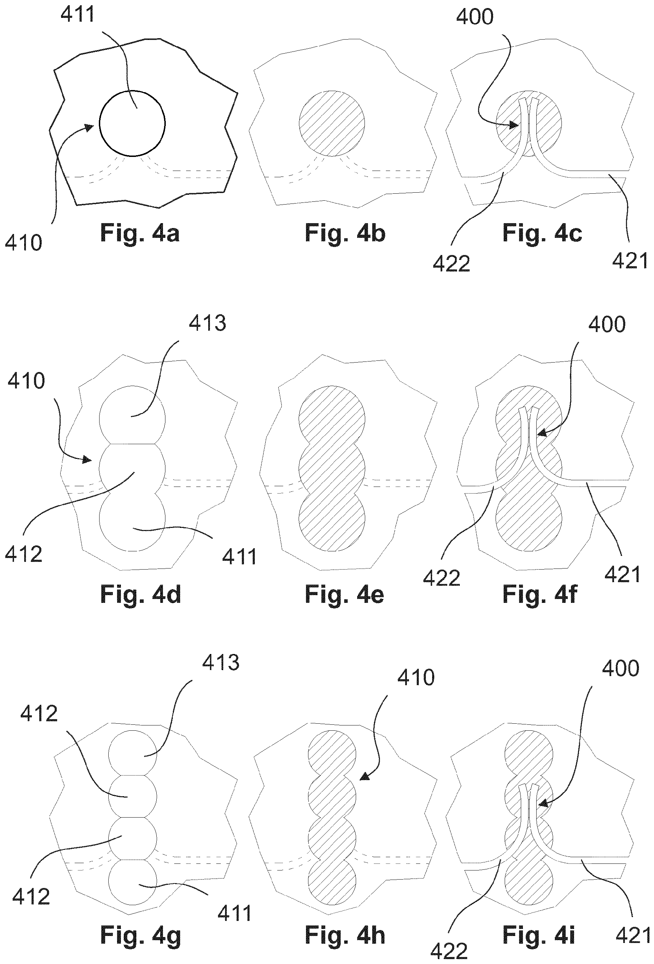

In den Figuren 4a bis 4c, 4d bis 4f und 4g bis 4i sind die oben beschriebenen Schritte zur Herstellung einer monolithischen Kraftübertragungsvorrichtung 100 an der Stelle des Hebellagers 400 dargestellt. Auf eine Darstellung von weiteren Positionierungen relativ zu den Trennschnitten 421, 422 wird hierbei verzichtet und auf die vorangehende Beschreibung zu den Figuren 2a bis 2f und 3a bis f verwiesen, da diese ebenso auf die Stelle des Hebellagers 400 angewendet werden kann. Zusätzlich wird an dem Beispiel des Hebellagers 400 eine Ausbildung der Ausnehmung 410 mit vier Bohrungen 411, 412, 413, 414 gezeigt. Die Position der Bohrungen ist so gewählt, dass ein möglichst optimaler Formschluss resultiert.

Es liegt auf der Hand das erste Material nicht nur an einer Stelle zu ersetzen, sondern mehrere Lagerstellen 200, 300, 400 zusammenzufassen, wodurch sich eine Vielzahl von Kombinationsmöglichkeiten ergibt. Je nach Anforderungsprofil an die monolithische Kraftübertragungsvorrichtung 100 wird z.B. nur das erste Material für die Dünnstellenbiegelager 200 der Parallelführung 105 ersetzt, oder nur das erste Material des Hebellagers 400 des Kraftübertragungshebels 401 etc. oder aber das erste Material aller Lagerstellen 200, 300, 400 wird ersetzt.

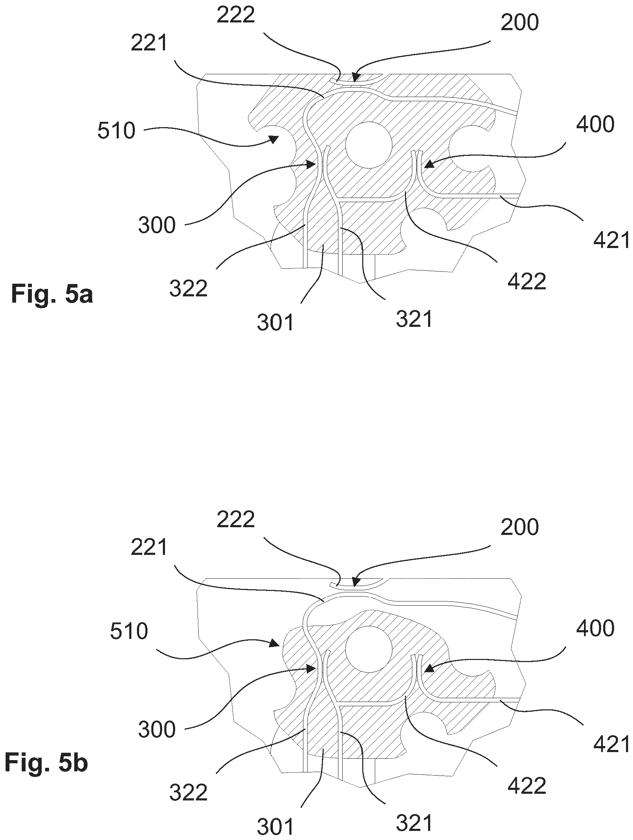

In den Figuren 5a und 5b ist je eine Ausnehmung 510 gezeigt, die gleich mehrere Stellen für den Ersatz des ersten Materials miteinander in einer Ausnehmung verbindet. Im Bereich des Hebellagers 400, der Biegestellen 300 des Koppelelements 301 und des Biegestellenlagers 200 des oberen Parallellenkers 103 sind die Distanzen untereinander relativ kurz und eine einzige Ausnehmung 510 für die Lagerstellen 200, 300, 400 benötigt am wenigsten des zweiten Materials zum Ausfüllen. Eine umrissoptimierte Form bzw. Kontur der Ausnehmung 510 bietet eine verbesserte Verankerung, d.h. einen besseren Formschluss.

Bei grösseren Untersetzungen der zu messenden Gewichtskraft sind das Hebellager 400 und das Dünnstellenbiegelager 300 des Koppelelements 301 näher zusammen oder es wird ein Mehrhebelsystem eingesetzt, d.h. am zweiten Hebelarm 403 (in Figur 1a gezeigt) ist ein weiterer Kraftübertragungshebel angesetzt. Es bietet sich daher an auch an jenen Stellen das das erste Material zu ersetzen, und womöglich mit anderen Stellen zu kombinieren.

Die Figuren 6a und 6b zeigen ein mögliches Verfahren zum Ausfüllen der Ausnehmungen 210, 310, 410, 510 mittels einer Induktionsspritze 601. Nachdem eine Ausnehmung 610 erstellt wurde, hier als eine Bohrung 611, wird die Kanüle 602 der Induktionsspritze 601 in die Ausnehmung 610 eingeführt. Der ausfüllende Werkstoff 604 wird durch eine Induktionsspule 603 auf Induktionstemperatur gehalten. Wie in Figur 6b gezeigt erfolgt dann das Ausfüllen durch Einspritzen des zweiten Werkstoffs unter gleichzeitigem Rückziehen der Kanüle 602. Um eine Reaktion des ausfüllenden Werkstoffes 604 mit der Umgebung zu vermeiden kann zusätzlich ein Schutzgas zum Beispiel durch eine Ringöffnung 605 eingeblasen werden. Unter Umständen kann es empfehlenswert sein den ganzen Vorgang unter Schutzgasatmosphäre oder im Teil oder Voll-Vakuum stattfinden zu lassen.

Die weiteren Figuren 7a und 7b veranschaulichen, dass durch gezielte Massnahmen die feste Verbindung zwischen dem ersten Werkstoff und dem zweiten bzw. dem weiteren Werkstoff verbessert werden kann. Zum einen besteht die Möglichkeit die Kontaktfläche zwischen den beiden Werkstoffen vorgängig zum Ausfüllen zu behandeln, zum Beispiel durch An- Abätzen (Beizen) oder einer Aufbringung einer Beschichtung oder einer Mikrostruktur. Das Resultat ist eine Übergangszone 606 zwischen den beiden Werkstoffen. Zum anderen kann die Kontaktfläche auch durch gezielte Formgebung erhöht werden, zum Beispiel durch Gewindegänge 607 in der Bohrung 611.

Ein weiteres mögliches Verfahren zum Ausfüllen der Ausnehmungen 210 wie sie zum Beispiel in Fig. 2g gezeigt sind beinhaltet ein Umformen des zweiten oder des weiteren Werkstoffes durch Einkneten. Dabei wird ein Rohling zunächst auf eine Temperatur erwärmt, so dass die speziellen Materialeigenschaften nicht zerstört werden, aber eine Verformung durch Krafteinleitung möglich wird. Der erwärmte Rohling wird auf eine Kavität, beispielsweise eine Ausnehmung im Rohling aus dem ersten Werkstoff, aufgelegt und mittels eines Stempels, welcher taumelnde Bewegungen ausführt und sich auf die Kavität zu bewegt, in diese hineingedrückt. Üblicherweise wird dazu eine Taumelpresse eingesetzt. Derartige Umformprozesse sind unter Umständen deswegen vorteilhaft, da das Material als Rohling einfach zur Verfügung gestellt werden kann, ein Arbeiten bei amorphen Metallen unterhalb der Glasübergangstemperatur möglich ist und hohe Prozesskräfte für eine gute formschlüssige Verbindung zwischen zwei Werkstoffen sorgen.

Ein anderes mögliches Verfahren zum Ausfüllen der Ausnehmungen 210, 310, 410, 510, 610, wie sie beispielsweise in Fig. 2a, 2d, 3a, 3d, 4a, 4d, 4g, 5a, 5b und 6a gezeigt sind, beinhaltet die Verwendung eines vorgefertigten Bauteils, wobei das ausfüllende Bauteil additiv gefertigt ist, zum Beispiel mittels Laserstrahlschmelzens im Pulverbettverfahren.

Als additiv oder generativ bezeichnet man Fertigungsprozesse, die durch schichtweisen Aufbau Lage für Lage Bauteile aus Metallen, Polymeren oder Sondermaterialien erzeugen. Im Falle der sogenannten Pulverbett-Verfahren werden Schichten eines Pulvers mit typischen Partikelgrössen von 10-100 µm auf eine Bauplattform aufgetragen und der Querschnitt des zu erzeugenden Bauteils per Laser (Selektives Laserschmelzen) oder Elektronenstrahl (Selektives Elektronenstrahlschmelzen) aufgeschmolzen und mit darunterliegenden Bauteilschichten verschweisst. In dieser Weise lassen sich schichtweise komplexeste Strukturen aus einer Vielzahl an Werkstoffen herstellen. Beschränkungen fertigungsgerechter Konstruktion für klassische Fertigungsverfahren gelten hier nicht mehr, da ohne Werkzeug auch Überhänge, Hinterschnitte oder Hohlräume erzeugt werden können.

Das Aufschmelzen lediglich dünner Pulverschichten resultiert zwangsläufig in sehr hohen Abkühlraten, die die notwendigen Abkühlraten zur Herstellung metallischer Gläser gewährleisten. In der Literatur werden erzielbare Abkühlraten von 4 × 10⁴ K/s bis 5 × 10⁶ K/s berichtet. Moderne speziell entwickelte, glasbildende Legierungssysteme erstarren bereits bei Abkühlraten <10² K/s amorph. Die hohe Leistungsdichte moderner Lasersysteme bei gleichzeitig kleinen Fokusdurchmessern erlaubt weiterhin ein schnelles und präzises Aufschmelzen von Pulverschichten oder Bauteiloberflächen. Hierdurch lassen sich komplexe, dünnwandige Bauteile produzieren, die gusstechnisch nicht realisierbar sind.

Durch den generativen Aufbau einzelner Schichten lassen sich zudem nicht nur dünne bzw. wenige Millimeter kleine, sondern auch makroskopisch grössere Bauteile erzeugen, deren Abmessungen die mittels Gussverfahren herstellbaren Bauteilgrössen sogar übertreffen. Abseits der oben genannten Vorteile im Vergleich zu konventionelleren Herstellungsverfahren zur Herstellung metallischer Gläser gilt es jedoch auch beim 3D-Druck gewisse, verfahrensbedingte Herausforderungen zu meistern. Ein Beispiel ist der Wärmeeintrag in das Material. Um einen amorphen Strukturzustand zu gewährleisten muss die mittels Laser-/Elektronenstrahl eingebrachte Wärme effektiv abgeleitet werden. Durch den schichtweisen Aufbau geschieht dies vornehmlich durch das Bauteil selbst, d.h. entlang der zuvor erstellten, darunterliegenden Schichten. Im Zuge der Herstellung von Bauteilen erfahren die einzelnen Schichten somit einen akkumulierten Wärmeeintrag, was wiederum zur Kristallisation und somit zu einem Verlust der für den amorphen Zustand charakteristischen Eigenschaften führen kann.

Die Herstellung amorpher Bauteile erfordert demnach eine Kenntnis der thermophysikalischen Eigenschaften der Legierungen, und bedingt eine Anpassung der Prozessführung auf die thermische Stabilität des Materials. Zudem werden ebenfalls hohe Anforderungen an die Pulvereigenschaften gestellt. Das Erzeugen glatter und dichter Pulverschichten setzt eine gewisse Fliessfähigkeit des Pulvers voraus, welche neben Einflüssen wie z. B. der Feuchtigkeit massgeblich durch Form und Grössenverteilung der Partikel gegeben wird. Die Qualität des Pulverbetts ist entscheidend für die entstehenden Materialeigenschaften (z. B. Porosität) und wirkt sich somit wiederum auf die mechanischen Eigenschaften der Bauteile aus.

Obwohl die hier im Zusammenhang mit der Erfindung gezeigten Figuren mehrheitlich MFR Kraftübertragungsvorrichtungen zeigen, ist natürlich auch die Anwendbarkeit für Kraftübertragungsvorrichtungen, welche sich der Dehnmessstreifentechnologie bedient gegeben. Ebenso beschränkt sich die Erfindung nicht auf Kraftübertragungsvorrichtungen mit nur einem Kraftübertragungshebel, auch jene Vorrichtungen mit zwei oder mehreren Kraftübertragungshebeln zur weiteren Untersetzung der zu wiegenden Gewichtskraft sind Ausgestaltungsvarianten dieser Erfindung.

### Liste der Bezugszeichen

- 100: Kraftübertragungsvorrichtung
- 101: beweglicher Parallelschenkel
- 102: feststehender Parallelschenkel
- 103: erster Parallellenker
- 104: zweiter Parallellenker
- 105: Parallelführung
- 106: zusätzliche Formgebung
- 107: Befestigungslöcher
- 200, 300, 400: Lagerstellen
- 200: Dünnstellenbiegelager
- 210, 310, 410, 510, 610: Ausnehmung
- 211, 212, 213, 311, 312, 313,: Bohrung
- 411, 412, 413, 414, 611:
- 221, 222, 321, 322, 421, 422: Trennschnitt
- 230: Aufmass
- 300: Dünnstellenbiegelager des Koppelelements
- 301: Koppelelement
- 400: Hebellager
- 401: Kraftübertragungshebel
- 402: erster Hebelarm
- 403: zweiter Hebelarm
- 601: Induktionsspritze
- 602: Kanüle
- 603: Induktionsspule
- 604: ausfüllender Werkstoff
- 605: Ringöffnung
- 606: Übergangszone
- 607: Gewindegänge

## Patentansprüche

1. Kraftübertragungsvorrichtung (100) mit einer Parallelführung (105) aufweisend
- einen beweglichen Parallelschenkel (101),
- einen feststehenden Parallelschenkel (102),
- einen ersten Parallellenker (103) und
- einen zweiten Parallellenker (104),
wobei die Parallelschenkel (101, 102) und die Parallellenker (103, 104) durch Dünnstellenbiegelager (200) miteinander verbunden sind,
wobei der bewegliche Parallelschenkel (101) durch die Parallellenker (103, 104) am feststehenden Parallelschenkel (102) geführt ist,
weiter mit einem am feststehenden Parallelschenkel (102) angeordneten Kraftübertragungshebel (401) aufweisend
- ein Hebellager (400), und
- einem ersten Hebelarm (402),
wobei der Kraftübertragungshebel (401) am Hebellager (400) schwenkbar gelagert ist und dessen erster Hebelarm (402) mit dem beweglichen Parallelschenkel (101) in kraftübertragender Weise mit verbunden ist,
wobei die kraftübertragende Verbindung mittels eines Koppelelements (301) mit mindestens einem weiteren Dünnstellenbiegelager (300) erfolgt,
wobei die Kraftübertragungsvorrichtung (100) oder zumindest ein Funktionsbereich der Kraftübertragungsvorrichtung (100) monolithisch ausgebildet ist, und
wobei ein Funktionsbereich der Kraftübertragungsvorrichtung (100) jeweils aus
dem ersten Parallellenker (103), und/oder
dem zweiten Parallellenker (104), und/oder
dem Kraftübertragungshebel (401) und/oder dem Koppelelement (301),
und aus den jeweils angrenzenden Lagerstellen (200, 300, 400) besteht,
**dadurch gekennzeichnet, dass**
die Kraftübertragungsvorrichtung (100) oder zumindest einer der Funktionsbereiche aus mindestens einem ersten Werkstoff besteht, und
dass mindestens eine der Lagerstellen (200, 300, 400) der Kraftübertragungsvorrichtung (100) oder des zumindest einen Funktionsbereichs aus einem zweiten Werkstoff besteht, wobei der zweite Werkstoff ein amorphes Metall ist und
in der/dem aus dem ersten Werkstoff ausgebildeten Kraftübertragungsvorrichtung (100) oder Funktionsbereich zumindest teilweise in einer Ausnehmung (210, 310, 410) eingebettet ist.

2. Kraftübertragungsvorrichtung nach Anspruch 1, **dadurch gekennzeichnet, dass** zumindest eine weitere Lagerstelle (200, 300, 400) aus einem weiteren Werkstoff besteht.

3. Kraftübertragungsvorrichtung nach einem der Ansprüche 1 oder 2, **dadurch gekennzeichnet, dass** der erste Parallellenker (103) und/oder der zweite Parallellenker (104) aus dem ersten Werkstoff bestehen, und dass die Dünnstellenbiegelager (200) aus dem zweiten oder dem weiteren Werkstoff bestehen.

4. Kraftübertragungsvorrichtung nach einem der Ansprüche 1 bis 3, **dadurch gekennzeichnet, dass** der Kraftübertragungshebel (401) und/oder das Koppelelement (301) aus dem ersten Werkstoff bestehen, und dass das Hebellager (400) und/oder die weiteren Dünnstellenbiegelager des Koppelelements (301) aus dem zweiten oder dem weiteren Werkstoff bestehen.

5. Kraftübertragungsvorrichtung nach einem der vorhergehenden Ansprüche, **dadurch gekennzeichnet, dass** der zweite Werkstoff und der weitere Werkstoff ein amorphes Metall ist, vorteilhafterweise ein amorphes Metall einer Verbindung auf Zirkonium-Titan Basis ist.

6. Kraftübertragungsvorrichtung nach einem der Ansprüche 2 bis 5, **dadurch gekennzeichnet, dass** die Kontur der Ausnehmung (210, 310, 410) derart gestaltet ist, dass die Lagerstelle (200, 300, 400) aus dem zweiten oder dem weiteren Material durch Formschluss in dem ersten Material befestigt angeordnet ist.

7. Kraftübertragungsvorrichtung nach einem der vorhergehenden Ansprüche, **dadurch gekennzeichnet, dass** die Form mindestens einer Ausnehmung (210, 310, 410) mindestens drei parallel verlaufenden, sich überschneidenden Bohrungen (211, 212, 213, 311, 312, 313, 411, 412, 413, 414) entspricht.

8. Kraftübertragungsvorrichtung nach Anspruch 7, **dadurch gekennzeichnet, dass** die Flucht der Bohrungen (211, 212, 213, 311, 312, 313, 411, 412, 413, 414) parallel oder rechtwinklig zu dem entsprechend auszubildenden
Dünnstellenbiegelager (200) der Parallelführung (105); dem
Hebellager (400) des Kraftübertragungshebels (401); und/oder dem
Koppelelement (300); und/oder dem
Dünnstellenbiegelager (301) des Koppelelements (300)
verlaufen.

9. Verfahren zur Herstellung einer monolithisch ausgebildeten Kraftübertragungsvorrichtung (100) oder zumindest eines monolithisch ausgebildeten Funktionsbereichs einer Kraftübertragungsvorrichtung (100),
wobei die Kraftübertragungsvorrichtung (100) eine Parallelführung (105) mit
- einem beweglichen Parallelschenkel (101),
- einem feststehenden Parallelschenkel (102),
- einem ersten Parallellenker (103) und
- einem zweiten Parallellenker (103) aufweist,
wobei die Parallelschenkel (101, 102) und die Parallellenker (103, 104) durch Dünnstellenbiegelager (200) miteinander verbunden sind,
wobei der bewegliche Parallelschenkel (101) durch die Parallellenker (103, 104) am feststehenden Parallelschenkel (102) geführt ist,
weiter aufweisend einen am feststehenden Parallelschenkel (102) angeordneten Kraftübertragungshebel (401) mit
- einem Hebellager (400), und
- einem ersten Hebelarm (402),
wobei der Kraftübertragungshebel (401) am Hebellager (400) schwenkbar gelagert ist und dessen erster Hebelarm (402) mit dem beweglichen Parallelschenkel (101) in kraftübertragender Weise mit verbunden ist,
wobei die kraftübertragende Verbindung mittels eines Koppelelements (301) mit mindestens einem weiteren Dünnstellenbiegelager (300) erfolgt, und
wobei ein Funktionsbereich der Kraftübertragungsvorrichtung (100) jeweils aus
dem ersten Parallellenker (103), und/oder
dem zweiten Parallellenker (104), und/oder
dem Kraftübertragungshebel (401) und/oder dem Koppelelement (301),
und aus den jeweils angrenzenden Lagerstellen (200, 300, 400) besteht, aufweisend die folgenden Schritte:
A) Bereitstellen eines Rohlings aus einem ersten Werkstoff;
B) Erstellen von Ausnehmungen (210, 310, 410) am bereitgestellten Rohling zumindest an den Stellen an denen eine Lagerstelle (200, 300, 400) zu liegen kommt;
C) Ausfüllen der erstellten Ausnehmungen (210, 310, 410) aus Schritt B mit einem zweiten Werkstoff, wobei der zweite Werkstoff ein amorphes Metall ist;
D) Nachbearbeitung des mit ausgefüllten Ausnehmungen (210, 310, 410) versehenen Rohlings aus Schritt C durch maschinelles Abtragen des ersten und/oder zweiten Werkstoffs; und
E) Freilegen der mindestens einen Lagerstelle (200, 300, 400) an den Stellen der ausgefüllten Ausnehmungen (210, 310, 410) so, dass die Kraftübertragungsvorrichtung (100) oder zumindest der mindestens eine Funktionsbereich aus dem ersten Werkstoff gebildet wird und so, dass die mindestens eine Lagerstelle (200, 300, 400) der Kraftübertragungsvorrichtung (100) oder des zumindest einen Funktionsbereichs aus dem zweiten Werkstoff ausgebildet wird.

10. Verfahren nach Anspruch 9, **dadurch gekennzeichnet, dass** zwischen Schritt B und C zusätzlich eine Oberflächenbehandlung im Bereich der Ausnehmungen (210, 310, 410) erfolgt.

11. Verfahren nach Anspruch 9 oder 10, **dadurch gekennzeichnet, dass** in Schritt C die Ausnehmungen (210, 310, 410) am bereitgestellten Rohling mit einem vorgefertigten Bauteil ausgefüllt werden, insbesondere das ausfüllende Bauteil additiv gefertigt ist, insbesondere das Bauteil mittels Laserstrahlschmelzens im Pulverbettverfahren gefertigt ist.

12. Verfahren nach einem der Ansprüche 9 bis 11, **dadurch gekennzeichnet, dass** zwischen Schritt C und D zusätzlich eine Nachbehandlung der Übergangszone zwischen zweien der mindestens zwei Werkstoffen erfolgt.

13. Verfahren nach einem der Ansprüche 9 bis 12, **dadurch gekennzeichnet, dass** das Ausfüllen der Ausnehmungen (210, 310, 410) in Schritt C durch Giessen, Umformen, oder Einkneten erfolgt.

14. Verfahren nach Anspruch 10, **dadurch gekennzeichnet, dass** die Oberflächenbehandlung ein An- Abätzung (Beizen) und/oder Beschichten der Oberfläche, und/oder eine Aufbringung einer Mikrostruktur ist.

15. Verfahren nach Anspruch 12, **dadurch gekennzeichnet, dass** die Nachbehandlung der Übergangszone ein lokaler Wärmeeintrag ist, beispielsweise mittels eines Lasers, der dafür sorgt, dass sich eine stoffschlüssige Materialverbindung in der Überganszone einstellt, oder dass die Nachbehandlung ein Anbringen eines niedrigviskosen Klebstoffes ist, der in mögliche Zwischenräume zwischen dem ersten Material und dem zweiten oder weiteren Material eindringt.

## Claims

1. A force transmission device (100) with a parallel guide (105), having
- a movable parallel leg (101),
- a fixed parallel leg (102),
- a first parallel link (103), and
- a second parallel link (104),
wherein the parallel legs (101, 102) and the parallel links (103, 104) are connected to each other by thin point flexure bearings (200),
wherein the movable parallel leg (101) is guided by the parallel links (103, 104) on the fixed parallel leg (102),
further, arranged on the fixed parallel leg (102), with a force transmission lever (401), having
- a lever bearing (400), and
- a first lever arm (402),
wherein the force transmission lever (401) is pivotably supported on the lever bearing (400) and its first lever arm (402) is connected to the movable parallel leg (101) in a force-transmitting manner,
wherein the force-transmitting connection is made by means of a coupling element (301) with at least one further thin point flexure bearing (300),
wherein the force transmission device (100) or at least one functional area of the force transmission device (100) is monolithically formed, and
wherein each functional area of the force transmission device (100) consists of
the first parallel link (103), and/or
the second parallel link (104), and/or
the force transmission lever (401) and/or the coupling element (301) and the respective adjoining bearing points (200, 300, 400),
**characterized in that**
the force transmission device (100) or at least one of the functional areas consists of at least one first material, and
**in that** at least one of the bearing points (200, 300, 400) of the force transmission device (100) or of the at least one functional area consists of a second material, wherein the second material is an amorphous metal, and
is at least partially embedded in a recess (210, 310, 410) in the force transmission device (100) or functional area formed of the first material.

2. The force transmission device according to claim 1, **characterized in that** at least one further bearing point (200, 300, 400) consists of a further material.

3. The force transmission device according to any one of claims 1 or 2,
**characterized in that** the first parallel link (103) and/or the second parallel link (104) consist of the first material, and **in that** the thin point flexure bearings (200) consist of the second or the further material.

4. The force transmission device according to any one of claims 1 to 3,
**characterized in that** the force transmission lever (401) and/or the coupling element (301) consist of the first material, and **in that** the lever bearing (400) and/or the further thin point flexure bearings of the coupling element (301) consist of the second or the further material.

5. The force transmission device according to any one of the preceding claims,
**characterized in that** the second material and the further material are an amorphous metal, advantageously an amorphous metal on the basis of zirconium-titanium.

6. The force transmission device according to any one of claims 2 to 5,
**characterized in that** the contour of the recess (210, 310, 410) is designed so that the bearing point (200, 300, 400) made of the second or the further material is arranged to be fixed in the first material in a form-fitting manner.

7. The force transmission device according to any one of the preceding claims, **characterized in that** the shape of at least one recess (210, 310, 410) corresponds to at least three parallel, intersecting bores (211, 212, 213, 311, 312, 313, 411, 412, 413, 414).

8. The force transmission device according to claim 7, **characterized in that** the alignment of the bores (211, 212, 213, 311, 312, 313, 411, 412, 413, 414) is parallel or perpendicular to the corresponding to-be-formed
thin point flexure bearing (200) of the parallel guide (105); the
lever bearing (400) of the force transmission lever (401); and/or the
coupling element (300); and/or the
thin point flexure bearing (301) of the coupling element (300).

9. A method for producing a monolithically formed force transmission device (100) or at least one monolithically formed functional area of a force transmission device (100),
wherein the force transmission device (100) has a parallel guide (105) with
- a movable parallel leg (101),
- a fixed parallel leg (102),
- a first parallel link (103), and
- a second parallel link (103),
wherein the parallel legs (101, 102) and the parallel links (103, 104) are connected to each other by thin point flexure bearings (200),
wherein the movable parallel leg (101) is guided by the parallel links (103, 104) on the fixed parallel leg (102),
further having, arranged on the fixed parallel leg (102), a force transmission lever (401) with
- a lever bearing (400), and
- a first lever arm (402),
wherein the force transmission lever (401) is pivotably supported on the lever bearing (400) and its first lever arm (402) is connected to the movable parallel leg (101) in a force-transmitting manner,
wherein the force-transmitting connection is made by means of a coupling element (301) with at least one further thin point flexure bearing (300), and
wherein each functional area of the force transmission device (100) consists of
the first parallel link (103), and/or
the second parallel link (104), and/or
the force transmission lever (401) and/or the coupling element (301),
and the respectively adjoining bearing points (200, 300, 400), having the following steps:
A) providing a blank made of a first material;
B) creating recesses (210, 310, 410) on the provided blank at least at the points where a bearing point (200, 300, 400) comes to rest;
C) filling the created recesses (210, 310, 410) of step B with a second material, the second material being an amorphous metal;
D) post-processing the blank provided with filled recesses (210, 310, 410) of step C by mechanical removal of the first and/or the second material; and
E) exposing the at least one bearing point (200, 300, 400) at the locations of the filled recesses (210, 310, 410) so that the force transmission device (100) or at least the at least one functional area is formed of the first material and so that the at least one bearing point (200, 300, 400) of the force transmission device (100) or of the at least one functional area is formed of the second material.

10. The method according to claim 9, **characterized in that**, between steps B and C, a surface treatment in the area of the recesses (210, 310, 410) is carried out additionally.

11. The method according to claim 9 or 10, **characterized in that**, in step C, the recesses (210, 310, 410) on the provided blank are filled with a prefabricated component, in particular **in that** the filling component is manufactured additively, in particular **in that** the component is manufactured by means of laser beam melting in the powder bed process.

12. The method according to any one of claims 9 to 11, **characterized in that**, between steps C and D, a post-treatment of the transition zone between two of the at least two materials is carried out additionally.

13. The method according to any one of claims 9 to 12, **characterized in that** the filling of the recesses (210, 310, 410) in step C is carried out by casting, forming, or kneading.

14. The method according to claim 10, **characterized in that** the surface treatment is a peptization or etching (pickling) and/or coating of the surface, and/or an application of a microstructure.

15. The method according to claim 12, **characterized in that** the post-treatment of the transition zone is a local application of heat, for example by means of a laser, which ensures that an integral material bond is established in the transition zone, or **in that** the post-treatment is applying a low-viscosity adhesive which penetrates into possible gaps between the first material and the second or further material.

## Revendications

1. Dispositif de transmission de force (100) avec un guidage parallèle (105) comprenant
- une branche parallèle mobile (101),
- une branche parallèle fixe (102),
- un premier bras parallèle (103) et
- un second bras parallèle (104),
dans lequel les branches parallèles (101, 102) et les bras parallèles (103, 104) sont reliés les uns aux autres par des paliers de flexion à pointe mince (200), dans lequel la branche parallèle mobile (101) est guidée par les bras parallèles (103, 104) sur la branche parallèle fixe (102),
ayant en outre un levier de transmission de force (401) agencé sur la branche parallèle fixe (102) comprenant
- un palier à levier (400), et
- un premier bras de levier (402),
dans lequel le levier de transmission de force (401) est monté pivotant sur le palier de levier (400) et son premier bras de levier (402) est relié à la branche parallèle mobile (101) d'une manière transmettant la force,
dans lequel la liaison de transmission de force s'effectue au moyen d'un élément de couplage (301) avec au moins un autre palier de flexion à pointe mince (300),
dans lequel le dispositif de transmission de force (100) ou au moins une zone fonctionnelle du dispositif de transmission de force (100) est de conception monolithique, et
dans lequel une zone fonctionnelle du dispositif de transmission de force (100) est constituée respectivement
du premier bras parallèle (103), et/ou
du second bras parallèle (104), et/ou
du levier de transmission de force (401) et/ou de l'élément de couplage (301)
et des points d'appui respectivement adjacents (200, 300, 400),
**caractérisé en ce que**
le dispositif de transmission de force (100) ou au moins l'une des zones fonctionnelles est constitué(e) d'au moins un premier matériau, et
**en ce qu'**au moins un des points d'appui (200, 300, 400) du dispositif de transmission de force (100) ou de l'au moins une zone fonctionnelle est constitué(e) d'un second matériau, dans lequel le second matériau est un métal amorphe et
est au moins partiellement noyé dans un évidement (210, 310, 410) du dispositif de transmission de force (100) ou de la zone fonctionnelle réalisée à partir du premier matériau.

2. Dispositif de transmission de force selon la revendication 1, **caractérisé en ce qu'**au moins un autre point d'appui (200, 300, 400) est constitué d'un autre matériau.

3. Dispositif de transmission de force selon l'une des revendications 1 ou 2, **caractérisé en ce que** le premier bras parallèle (103) et/ou le second bras parallèle (104) sont constitués du premier matériau, et que les paliers de flexion à pointe mince (200) sont constitués du second ou de l'autre matériau.

4. Dispositif de transmission de force selon l'une des revendications 1 à 3, **caractérisé en ce que** le levier de transmission de force (401) et/ou l'élément de couplage (301) sont constitués du premier matériau, et que le palier de levier (400) et/ou l'autre palier de flexion à pointe mince de l'élément de couplage (301) sont constitués du second ou de l'autre matériau.

5. Dispositif de transmission de force selon l'une des revendications précédentes, **caractérisé en ce que** le second matériau et l'autre matériau sont un métal amorphe, de préférence un métal amorphe d'un composé à base de zirconium-titane.

6. Dispositif de transmission de force selon l'une des revendications 2 à 5, **caractérisé en ce que** le contour de l'évidement (210, 310, 410) est conçu de telle sorte que le point d'appui (200, 300, 400) constitué du second ou de l'autre matériau est formé par engagement positif en étant attaché au premier matériau.

7. Dispositif de transmission de force selon l'une des revendications précédentes, **caractérisé en ce que** la forme d'au moins un évidement (210, 310, 410) présente au moins trois alésages parallèles et sécants (211, 212, 213, 311, 312, 313, 411, 412, 413, 414).

8. Dispositif de transmission de force selon la revendication 7, **caractérisé en ce que** l'alignement des alésages (211, 212, 213, 311, 312, 313, 411, 412, 413, 414) sont parallèles ou perpendiculaires au
palier de flexion à pointe mince (200) correspondant du guidage parallèle (105); au
palier de levier (400) du levier de transmission de force (401); et/ou à
l'élément de couplage (300); et/ou au
palier de flexion à pointe mince (301) de l'élément de couplage (300).

9. Procédé de fabrication d'un dispositif de transmission de force (100) monolithique ou d'au moins une zone fonctionnelle monolithique d'un dispositif de transmission de force (100),
dans lequel le dispositif de transmission de force (100) présente un guidage parallèle (105) avec
- une branche parallèle mobile (101),
- une branche parallèle fixe (102),
- un premier bras parallèle (103) et
- un second bras parallèle (103),
dans lequel les branches parallèles (101, 102) et les bras parallèles (103, 104) sont reliés les uns aux autres par des paliers de flexion à pointe mince (200), dans lequel la branche parallèle mobile (101) est guidée par les bras parallèles (103, 104) sur la branche parallèle fixe (102),
comprenant en outre un levier de transmission de force (401) agencé sur la branche parallèle fixe (102) avec
- un palier à levier (400), et
- un premier bras de levier (402),
dans lequel le levier de transmission de force (401) est monté pivotant sur le palier de levier (400) et son premier bras de levier (402) est relié à la branche parallèle mobile (101) d'une manière transmettant la force,
dans lequel la liaison de transmission de force s'effectue au moyen d'un élément de couplage (301) avec au moins un autre palier de flexion à pointe mince (300), et
dans lequel une zone fonctionnelle du dispositif de transmission de force (100) est constituée respectivement
du premier bras parallèle (103), et/ou
du second bras parallèle (104), et/ou
du levier de transmission de force (401) et/ou de l'élément de couplage (301),
et est constitué des points d'appui (200, 300, 400) adjacents respectifs, comprenant les étapes suivantes :
A) la fourniture d'une pièce brute constituée d'un premier matériau;
B) la création d'évidements (210, 310, 410) sur la pièce brute prévue au moins aux emplacements où un point d'appui (200, 300, 400) vient se placer;
C) le remplissage des évidements (210, 310, 410) créés à l'étape B avec un second matériau, dans lequel le second matériau est un métal amorphe;
D) le post-traitement de la pièce brute pourvue d'évidements (210, 310, 410) remplis de l'étape C par enlèvement mécanique du premier et/ou second matériau ; et
E) l'exposition de l'au moins un point d'appui (200, 300, 400) aux emplacements des évidements comblés (210, 310, 410) de telle sorte que le dispositif de transmission de force (100) ou au moins l'au moins une zone fonctionnelle est formé(e) du premier matériau et de telle sorte que l'au moins un point d'appui (200, 300, 400) du dispositif de transmission de force (100) ou de l'au moins une zone fonctionnelle est formé(e) du second matériau.

10. Procédé selon la revendication 9, **caractérisé en ce qu'**entre les étapes B et C il y a également un traitement de surface au niveau des évidements (210, 310, 410).

11. Procédé selon la revendication 9 ou 10, **caractérisé en ce qu'**à l'étape C les évidements (210, 310, 410) sur la pièce brute prévue sont remplis d'un élément préfabriqué, notamment l'élément de remplissage est fabriqué de façon additive, l'élément est notamment fabriqué au moyen d'une fusion par faisceau laser dans le procédé à lit de poudre.

12. Procédé selon l'une quelconque des revendications 9 à 11, **caractérisé en ce qu'**entre les étapes C et D a lieu un post-traitement supplémentaire de la zone de transition entre deux des au moins deux matériaux.

13. Procédé selon l'une quelconque des revendications 9 à 12, **caractérisé en ce que** le remplissage des évidements (210, 310, 410) à l'étape C s'effectue par coulage, formage ou malaxage.

14. Procédé selon la revendication 10, **caractérisé en ce que** le traitement de surface est un décapement (décapage) et/ou un revêtement de la surface, et/ou l'application d'une microstructure.

15. Procédé selon la revendication 12, **caractérisé en ce que** le post-traitement de la zone de transition est une application locale de chaleur, par exemple au moyen d'un laser, qui assure qu'une liaison matérielle s'établit dans la zone de transition, ou que le post-traitement est l'application d'un adhésif à faible viscosité, qui pénètre dans d'éventuels interstices entre le premier matériau et le second ou un autre matériau.
